Europäisches Patentamt

European Patent Office

Office européen des brevets

(11) Veröffentlichungsnummer: **0 485 987 A1**

# EUROPÄISCHE PATENTANMELDUNG

(21) Anmeldenummer: **91119353.0**

(22) Anmeldetag: **13.11.91**

(51) Int. Cl.5: **B23Q 7/10**, B23Q 16/00

(30) Priorität: **15.11.90 DE 4036380**

(43) Veröffentlichungstag der Anmeldung:
**20.05.92 Patentblatt 92/21**

(84) Benannte Vertragsstaaten:
**CH DE ES FR GB IT LI SE**

(71) Anmelder: **Klöckner-Moeller GmbH**
**Hein-Moeller-Strasse 7-11**
**W-5300 Bonn 1(DE)**

(72) Erfinder: **Schneider, Wolfgang, Dipl. Ing.**
**Am Finkenberg 27**
**W - 5300 Bonn 3(DE)**

(54) **Beschickungsvorrichtung für Werkzeugmaschinen und dergleichen.**

(57) Eine Beschickungsvorrichtung wird in Bearbeitungszentren für die Herstellung von Werkzeugen als Werkstückwechsler oder als Werkzeugwechsler eingesetzt. Sie bildet mit einem Handhabungsgerät (3), mindestens einem Palettenregal (4a, 4b), mindestens einem Übergabetisch (5) und einer Steuerungseinheit (6) eine autonome Einheit (1). Die autonome Einheit (1) kommuniziert über eine Schnittstelle (7) mit einer Werkzeugmaschine (2), wobei die Steuerungseinheit (6) nach der Verbindung mit der Werkzeugmaschine (2) eine Plausibilitätsprüfung durchführt und alle Aktivitäten des Handhabungsgerätes (3) absichert. Dadurch ist die Beschickungsvorrichtung flexibel einsetzbar und kann unabhängig von dem Einsatz an einer bestimmten Werkzeugmaschine für unterschiedliche Einsatzmöglichkeiten progammiert werden. Der Übergabetisch (5) bietet die Möglichkeit manuell in den Ablauf einzugreifen. Dafür ist an dem Übergabetisch (5) eine Abdeckung (11) vorgesehen, die mit der Steuerungseinheit (6) derart gekoppelt ist, daß nach Entfernen der Abdeckung (11) das Handhabungsgerät (3) abgeschaltet oder für den Bereich des Übergabetisches (5) gesperrt ist.

Fig.1

Bei der Erfindung handelt es sich um eine Beschickungsvorrichtung für Werkzeugmaschinen und dergleichen.

Derartige Beschickungsvorrichtungen werden in sogenannten Bearbeitungszentren für die Herstellung von Werkzeugen als Werkstückwechsler oder auch als Werkzeugwechsler eingesetzt. Eine bekannte Vorrichtung dieser Art, ist in "Industrieroboter" von H.-J. Warnecke und R. D. Schraft auf den Seiten 242 bis 245 beschrieben und dargestellt. Hierbei handelt es sich um eine Vorrichtung zur Werkstückhandhabung an Werkzeugmaschinen, bei der die einzelnen Greif- und Positionierfunktionen mit dem Arbeitstakt der Werkzeugmaschine synchronisiert werden. Die Vorrichtung kann auch zum Werkzeugwechsel an der Maschine eingesetzt werden. Dabei werden alle Funktionen derart programmiert, daß die Vorrichtung einen bestimmten Zyklus an einer bestimmten Werkzeugmaschine abarbeitet.

Der Erfindung liegt die Aufgabe zugrunde, eine Beschickungsvorrichtung zu schaffen, die noch flexibler einsetzbar ist und unabhängig von dem Einsatz an einer bestimmten Maschine programmiert werden kann und unabhängig von flexiblen Fertigungssystemen für Einzelfertigung wirtschaftlich eingesetzt werden kann.

Diese Aufgabe wird durch den kennzeichnenden Teil des Anspruchs 1 gelöst. Als autonome Einheit ist die Beschickungsvorrichtung nicht an eine bestimmte Werkzeugmaschine gebunden, sondern kann mit jeder CNC-gesteuerten Werkzeugmaschine, die über eine identische Norm-Schnittstelle (vorzugsweise RS 232) verfügt gekoppelt werden. Für bestimmte Arbeitsgänge wird die Steuerung einmal programmiert und kann dann dieses Programm an unterschiedlichen Werkzeugmaschinen abfahren. Hierzu fährt die Steuerung, wenn sie über die Schnittstelle mit der Werkzeugmaschine verbunden wird, zuerst eine Plausibilitätsprüfung durch, die der Absicherung aller Aktivitäten des Handhabungsgerätes dient.

Besonders vorteilhaft ist es, wenn die Palettenregale sowohl Werkstücke, als auch Werkzeuge enthalten. Hierdurch kann das Handhabungsgerät auch für den Werdkzeugwechsel benutzt werden.

Damit die einzelenen Werkzeuge und Werkstückpaletten identifiziert und nach Ablage wiedergefunden werden können, sind diese mit einem Kennungssystem versehen, das in bekannter Weise abgefragt wird. Das Kennungssystem und der Standort werden in der Steuerung gespeichert. Dadurch kann das Handhabungsgerät jederzeit wieder auf die einzelnen Teile zugreifen.

Beispielhaft ist eine Beschickungsvorrichtung in den schematischen Figuren dargestellt.

Hierbei zeigen:

Fig. 1 die schematisierte Zuordnung der Einzelelemente

Fig. 2 eine beispielhafte Darstellung eines Aufbaues.

Fig. 3 Die Zuordnung einer Beschickungsvorrichtung zu mehreren Werkzeugmaschinen.

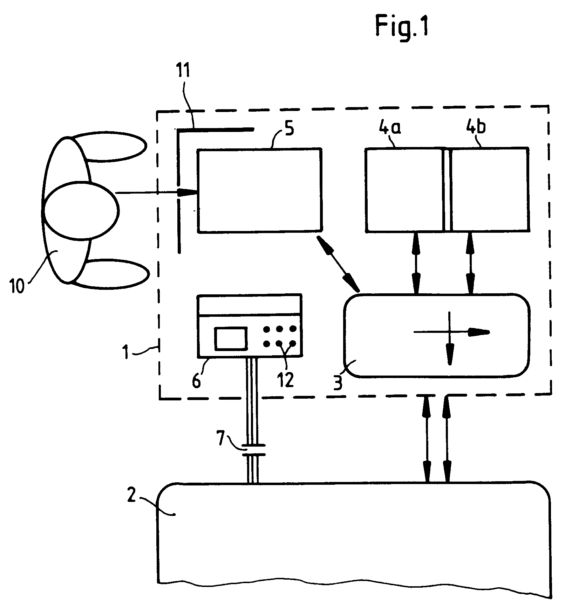

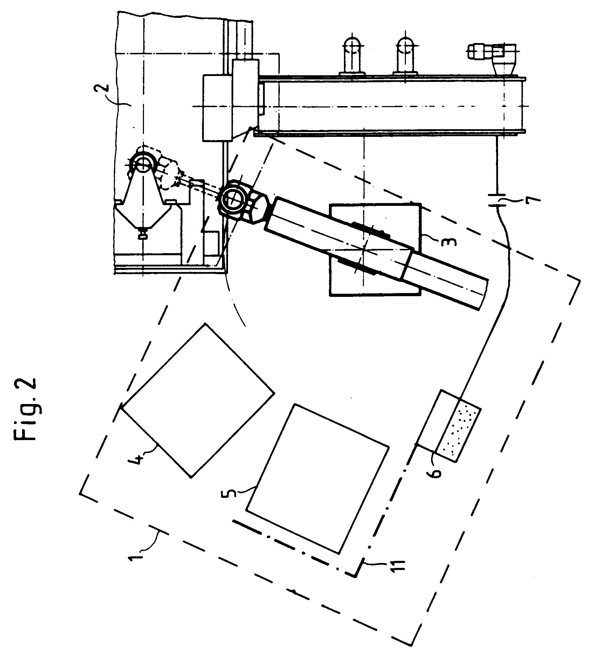

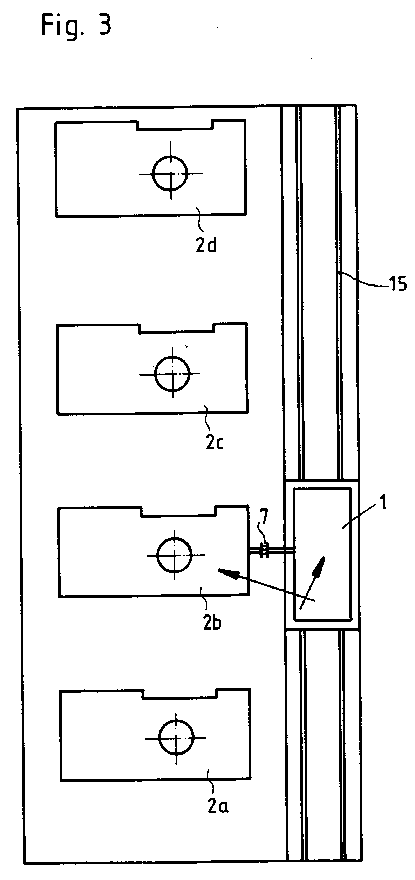

In der Fig. 1 ist die Zuordnung der einzelnen Elemente der Beschickungsvorrichtung beispielhaft dargestellt. Das Handhabungsgerät 3 wirkt mit den Palettenregalen 4a und 4b zusammen, wenn Paletten oder Werkzeuge abgeholt und der Werkzeugmaschine 2 zur Verfügung gestellt werden sollen. In gleicher Weise holt das Handhabungsgerät 3 Paletten oder Werkzeuge von der Werkzeugmaschine 2 und legt sie in einem der Regale 4a oder 4b ab. Gleichermaßen kann das Handhabungsgerät 3 Paletten oder Werkzeuge auf dem Übergabetisch 5 ablegen oder abholen, um sie entweder in einem Regal 4a, 4b abzulegen, oder der Werkzeugmaschine zur Verfügung zu stellen. Der übergabetisch 5 stellt eine Schnittstelle zwischen der manuellen Handhabung durch Bedienungspersonal 10 und der maschinellen Handhabung dar. Hierbei kann die maschinelle Handhabung sowohl programmgesteuert als auch manuell gesteuert erfolgen. Aus diesem Grunde ist die Sicherheitsabdeckung 11 mobil ausgeführt, damit sie flexibel gehandhabt werden kann. Der übrige Sicherheitsbereich ist in bekannter Weise abgegrenzt. Für die Bedienung und zur Speicherung und Abarbeitung von Programmen ist die Steuerungseinheit 6 in dem Bedienfeld 12 vorgesehen. Die Kommunikation der Beschickungsvorrichtung 1 mit der Werkzeugmaschine 2 erfolgt über eine Normschnittstelle 7, wobei vorzugsweise eine RS 232 Schnittstelle verwendet wird. Über diese Schnittstelle wird vor dem ersten Anlauf eine Plausibilitätsprüfung durchgeführt, wobei alle Aktivitäten des Handhabungsgerätes 3 mit den Programmschritten der Werkzeugmaschine 2 koordiniert werden. Damit wird die Kompatibilität von Beschickungsvorrichtung 1 und Werkzeugmaschine 2 abgefragt. Hierdurch ergibt sich der besondere Vorteil der Erfindung, daß die Beschickungseinrichtung auf unterschiedliche Typen von CNC-Maschinen angepaßt werden kann. Die Steuerung wird nur einmal auf die entsprechende Werkzeugmaschine und den Arbeitsablauf programmiert und kann dann auf Maschinen mit gleicher Steuerung und gleichem Aufbau ohne weitere Anpassung übertragen werden. Ebenso ist es möglich manuell in den Ablauf einzugreifen und Zwischenarbeitsgänge durchzuführen. In der Fig. 2 ist eine mögliche Konfiguration der Beschickungsvorrichtung 1 dargestellt, die einer Werkzeugmaschine 2 zugeordnet ist. Das Palettenregal 4 und der Übergabetisch 5 liegen im Aktionsbereich des Handhabungsgerätes 3 und sind in üblicher und bekannter Weise abgesichert. Diese Absicherung ist daher nicht näher dargestellt. Vor dem Übergabetisch ist ein mobile Sicherheitsabdeckung 11 vorgesehen, die mit der Steuerungseinheit 6 derart gekoppelt sein kann, daß bei Entfernen ein Stop des Handhabungsgerätes 3 erfolgt, oder daß dieser Bereich bei entfernter Sicherheitsabdeckung 11 für die Aktivitäten des Handhabungsgerätes 3 gesperrt ist. Die Beschickungsvorrichtung 1 wird in einer bestimmten Anordnung der Werkzeugmaschine 2 zugeordnet, die über Anschläge oder dergl. definiert sein kann. Die feste Zuordnung ist jedoch auch dadurch zu erreichen, das das Handhabungsgerät 3 oder die gesamte Beschickungsvorrichtung auf einem Führungssystem geführt werden. Damit lassen sich mehrere Werkzeugmaschinen mit einer Beschickungsvorrichtung bedienen. Eine mögliche Zuordnung zu mehreren Werkzeugmaschinen 2a, 2b, 2c, 2d ist in der Fig. 3 gezeigt. Die Beschickungsvorrichtung ist auf dem Führungssystem 15 geführt und kann nach Bedarf jeder einzelnen Werkzeugmaschine Zugeordnet werden indem lediglich ein genau positionierter Standort fixiert wird und die Kopplung mit der Werkzeugmaschine (hier 2b) und der Steuerung 6 über die Schnittstelle 7 erfolgt.

**Patentansprüche**

1. Beschickungsvorrichtung für Werkzeugmaschinen oder dergleichen, bei der ein Handhabungsgerät (3), mindestens ein Palettenregal (4a, 4b), mindestens ein Übergabetisch (5) und eine Steuerungseinheit (6) eine autonome Einheit (1) bilden, dadurch gekennzeichnet, daß die Steuerungseinheit (6) der autonomen Einheit (1) über eine Schnittstelle (7) mit einer Werkzeugmaschine (2) kommuniziert und die Steuerungseinheit (6) nach der Verbindung mit der Werkzeugmaschine (2) eine Plausibilitätsprüfung durchführt und die Aktivitäten des Handhabungsgerätes (3) absichert.

2. Beschickungsvorrichtung nach Anspruch 1, dadurch gekennzeichnet, daß der Übergabetisch (5) durch eine mobile Abdeckung (11) gesichert ist.

3. Beschickungsvorrichtung nach einem der Ansprüche 1 oder 2, dadurch gekennzeichnet, daß die mobile Abdeckung (11) mit der Steuerungseinheit (6) derart gekoppelt ist, daß nach Entfernen der mobilen Abdeckung (11) das Handhabungsgerät (3) ganz abgeschaltet wird, oder nur der Bereich des Übergabetisches (5) gesperrt ist.

4. Beschickungsvorrichtung nach einem der Ansprüche 1 bis 3, dadurch gekennzeichnet, daß die Palettenregale (4a, 4b) sowohl Werkstücke, als auch Werkzeuge enthalten können.

5. Beschickungsvorrichtung nach einem der Ansprüche 1 bis 4, dadurch gekennzeichnet, daß die Steuerungseinheit (6) die Paletten und Werkzeuge über ein Kennungssystem identifiziert.

6. Beschickungsvorrichtung nach einem der Ansprüche 1 bis 5, dadurch gekennzeichnet, daß das Handhabungsgerät (3) den jeweiligen Standort des Werkzeuges oder der Palette an die Steuerung (6) weitergibt, die die Standortdaten speichert, so daß sie jederzeit wieder abrufbar sind.

7. Beschickungsvorrichtung nach einem der Ansprüche 1 bis 6, dadurch gekennzeichnet, daß die autonome Einheit (1) auf einem Führungssystem (15) geführt ist, und mit mehreren Werkzeugmaschinen (2a, 2b, 2c, 2d) über Schnittstellen (7) gekoppelt werden kann.

# Fig.1

EP 0 485 987 A1

Fig. 2

5

Fig. 3

| | EINSCHLÄGIGE DOKUMENTE | | EP 91119353.0 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
| X | US - A - 4 473 833 (YOSHIDA) <br> * Fig. 1,2,7; Zusammenfassung; Ansprüche 1,2,7 * | 1,5,6 | B 23 Q 7/10 <br> B 23 Q 16/00 |
| A | -- | 4 | |
| A | DD - A - 259 183 (VEB IND) <br> * Fig. 2; Zusammenfassung; Seite 1, Absatz 2 "Anwendungsbebiet" * <br> -- | 1,4 | |
| A | DD - A - 211 509 (VEB FO + ENTW) <br> * Fig. 1; Zusammenfassung; Seite 1, Absatz 1 * <br> -- | 1 | |
| A | US - A - 4 566 837 (SHIOMI) <br> * Fig. 1; Zusammenfassung; Anspruch * <br> ---- | 1 | |
| | | | **RECHERCHIERTE SACHGEBIETE (Int. Cl.⁵)** <br><br> B 21 D 43/00 <br> B 23 Q 7/00 <br> B 66 F 9/00 <br> G 06 F 15/00 |

Der vorliegende Recherchenbericht wurde für alle Patentansprüche erstellt.

| Recherchenort | Abschlußdatum der Recherche | Prüfer |
|---|---|---|
| WIEN | 17-01-1992 | BLASL |